# EUROPÄISCHE PATENTANMELDUNG

(11) **EP 4 803 448 A1**
(43) Veröffentlichungstag der Anmeldung: **09.09.2026**
(21) Anmeldenummer: 26155834.0
(22) Anmeldetag: 02.02.2026
(51) Int. Cl.: B65G 9/00, B65G 17/20, B65G 19/02, B65G 23/14, B61B 10/02

(54) **ANTRIEBSEINRICHTUNG FÜR EINE FÖRDERANLAGE**

(30) Priorität: 24.02.2025 CH 1682025
(71) Anmelder: FERAG AG, 8340 Hinwil (CH)
(72) Erfinder: FENILE, Roberto, 8340 Hinwil (CH); GUHL, Simon, 8340 Hinwil (CH)
(74) Vertreter: Frei Patent Attorneys

(57) **Zusammenfassung**

Die Erfindung betrifft eine Antriebseinrichtung (20) für eine Hängeförderanlage (1) zum Antreiben von entlang einer Mitnahme-Führungsschiene (2.1) bewegbaren Förderwagen (10) zur hängenden Förderung von Fördergütern (3), wobei die Antriebseinrichtung (20) ein endlos umlaufendes, flexibles Antriebsorgan (23) mit einer Mehrzahl von am Antriebsorgan (21) angeordneten und voneinander beabstandeten Mitnehmern (26) zum Mitnehmen von entlang der Mitnahme-Führungsschiene (2.1) angeordneten Förderwagen (10) sowie ein Antriebselement (24) zum Antreiben des Antriebsorgans (21) enthält. Die Antriebseinrichtung (20) umfasst einen Grundkörper (21), welcher einen Aufnahmekanal (22) aufweist, in welchem das endlos umlaufende, flexible Antriebsorgan (23) geführt ist.

## Beschreibung

Die vorliegende Erfindung liegt auf dem Gebiet der Förderlogistik, insbesondere der Intralogistik. Sie betrifft eine Antriebseinrichtung für eine Förderanlage zum Antreiben von entlang einer Mitnahme-Führungsschiene bewegbaren Förderwagen zur hängenden Förderung von Fördergütern, eine Förderweiche mit einer Antriebseinrichtung für eine Förderanlage sowie eine Förderanlage mit einer Antriebseinrichtung. Ferner betrifft die Erfindung eine Antriebskette und eine Kettenspannvorrichtung für eine Antriebseinrichtung sowie eine Vereinzelungsvorrichtung zum einzelnen Freigeben von Förderwagen für eine Förderanlage.

Förderanlagen im Bereich der Förder- und Intralogistik dienen beispielsweise dem Sortieren, Kommissionieren sowie dem Ein- und Ausspeichern von Fördergütern. So finden die genannten Förderanlagen insbesondere in Logistik- bzw. Verteilzentren zum Sortieren, Verteilen, Kommissionieren und/oder Zwischenspeichern von Gütern, wie Paketen, Beuteln, etc. Einsatz.

Die Güter werden in solchen Förderanlagen beispielsweise über schienengeführte Förderwagen entlang von Führungsschienen, welche den Förderweg der Fördergüter vorgeben, gefördert. So ist beispielsweise die Förderung von Fördergütern mittels Hängeförderanlagen bekannt, wo die Fördergüter in einem Fördermittel, wie z. B. einer Fördertasche, über Förderwagen entlang von Führungsschienen hängend gefördert werden. Die Fördertaschen mit den Gütern sind dabei an den Förderwagen angehängt.

Gemäss einer besonderen Ausführungsvariante einer Hängeförderanlage sind die Förderwagen als unabhängig voneinander und individuell antreibbare Einzelwagen ausgebildet. So sind Gravitationsförderer bekannt, gemäss welchen die Einzelwagen mit den Gütern entlang eines Potentialgefälles mittels Schwerkraft individuell bewegt werden. Die Einzelwagen müssen jedoch bei mangelnder kinetischer Energie entlang von horizontalen oder ansteigenden Förderstrecken aktiv angetrieben werden. Dies geschieht in der Regel mittels angetriebener Mitnehmer einer Antriebseinrichtung, auch Mitnahmeeinrichtung genannt. Diese bewegt die Einzelwagen vor sich herschiebend entlang der Führungsschiene.

Solche Antriebseinrichtungen finden beispielsweise bei Förderweichen Einsatz, an welchen Einzelwagen, z. B. aus einer Speichereinrichtung, in eine Förderstrecke eingeschleust werden.

Ferner finden solche Antriebseinrichtung auch entlang von Steigstrecken Einsatz, entlang welchen die Einzelwagen über die Mitnehmer jeweils auf ein höheres Potentialniveau gefördert werden.

So beschreibt die Veröffentlichungsschrift EP 3 502 015 A1 einen gattungsgemässe Antriebseinrichtung zum Antreiben von Förderwagen einer Hängeförderanlage mittels Mitnehmern, welche auf einer Antriebskette angeordnet sind. Die Antriebskette ist endlos umlaufend ausgebildet und wird über ein Kettenrad angetrieben, welches mit seiner Zahnung zwischen die Kettenglieder der Antriebskette eingreift. Die Antriebskette wird über eine Mehrzahl von Kettenführungsrollen geführt. Diese sorgen für die Umlenkung der Antriebskette von einem Mitnahmeabschnitt, in welchem die angetriebene Antriebskette über die Mitnehmer Förderwagen entlang einer Mitnahme-Führungsschiene mitnimmt, in einen Rückführabschnitt, in welchem die Antriebskette wieder zurück in den Mitnahmeabschnitt geführt wird. Weitere Führungsrollen dienen der Kettenführung entlang des Mitnahmeabschnittes der Führungsschiene.

Die in der EP 3 502 015 A1 beschriebene Antriebseinrichtung weist einige Nachteile auf. So besteht diese aus einer Vielzahl von Bauteilen, welche zum Teil auch bewegt sind. Bewegte Bauteile, wie Führungsrollen, führen zu einer zusätzlichen Lärmbelastung und sind anfällig auf Verschleiss. Die Antriebskette ist überdies über zahlreiche Streckenabschnitte ungeführt. Schwingungen der Kette und unerwünschte Schlaggeräusche sind die Folge. Um unerwünschte Schwingungen der Antriebskette zu vermeiden, muss für eine vergleichsweise hohe Kettenspannung gesorgt werden. Dies erfordert eine robuste, für eine hohe Kettenspannung ausgelegte Kettenspannvorrichtung. Eine unter hoher Kettenspannung betriebene Antriebskette geht wiederum einher mit einem erhöhten Verschleiss und somit vermehrtem Wartungsbedarf. So fördert eine hohe Kettenspannung den Verzug der Antriebskette, was den regelmässigen Austausch von Antriebskette und Antriebsrad und gegebenenfalls weitere Komponenten, wie Führungs- bzw. Umlenkrollen notwendig macht.

Überdies stellt die Geräuschentwicklung in Antriebseinrichtungen mit Kettenantrieb ein bekanntes Problem dar. Die Geräusche werden durch das Schlagen und/oder Schleifen von Kettengliedern auf Kettenrädern bzw. Führungsrollen erzeugt, wobei nebst Umlenkbewegungen auch die bereits erwähnten Schwingungen der Kette die unerwünschten Schlaggeräusche verursachen. Die Geräusche entstehend dabei insbesondere durch die Kollision von Metallteilen. Aufgrund der hohe Verschleissbeständigkeit und Belastbarkeit werden jedoch Ketten aus Metall gegenüber Kunststoffketten bevorzugt.

In der EP 3 502 015 A1 versucht man diese Problematik mit einem zwischen der Förderkette und den Umlenk- und Führungsrollen mitlaufenden Riemen aus Kunststoff zu entschärfen. Zudem werden die Führungsrollen zahnlos ausgebildet und mit einem Abrollprofil aus Kunststoff ausgestattet.

All diese Massnahmen bedeuten jedoch wieder zusätzliche Bauteile, welche materialbedingt wiederum verschleissanfällig sind. Durch die Erhöhung der Bauteilzahl wird auch die Störungsanfälligkeit des Gesamtsystems erhöht.

Es ist daher eine Aufgabe vorliegender Erfindung, eine gattungsgemässe Antriebseinrichtung vorzuschlagen, welche aus weniger Bauteilen besteht.

Es ist eine weitere Aufgabe vorliegender Erfindung, eine gattungsgemässe Antriebseinrichtung vorzuschlagen, bei welcher das umlaufende, flexible Antriebsorgan, wie Antriebskette, mit einer geringeren Spannung bzw. Kettenspannung angetrieben werden kann.

Es ist eine weitere Aufgabe vorliegender Erfindung, eine gattungsgemässe Antriebseinrichtung vorzuschlagen, welche mit einer auf geringere (Spann-)Kräfte ausgelegte Spannvorrichtung, wie Kettenspannvorrichtung, auskommt.

Es ist eine weitere Aufgabe vorliegender Erfindung, eine gattungsgemässe Antriebseinrichtung mit einer Spannvorrichtung, wie Kettenspannvorrichtung, zum automatischen (Nach-) Spannen des Antriebsorgans, wie Antriebskette, vorzuschlagen.

Es ist eine weitere Aufgabe vorliegender Erfindung, eine gattungsgemässe Antriebseinrichtung vorzuschlagen, welche mit weniger Führungs- und Umlenkrädern bzw. - rollen auskommt.

Es ist eine weitere Aufgabe vorliegender Erfindung, eine gattungsgemässe Antriebseinrichtung vorzuschlagen, welche geräuscharmer betrieben werden kann.

Es ist eine weitere Aufgabe vorliegender Erfindung, eine gattungsgemässe Antriebseinrichtung vorzuschlagen, welche kostengünstiger in der Herstellung ist.

Es ist eine weitere Aufgabe vorliegender Erfindung, eine gattungsgemässe Antriebseinrichtung vorzuschlagen, welche einfacher in der Montage ist.

Wenigstens eine dieser Aufgaben wird durch die Merkmale der unabhängigen Ansprüche 1, 12 und 15 gelöst.

Ferner ist es eine weitere Aufgabe der vorliegenden Erfindung, ein flexibles Antriebsorgan, wie Antriebskette, mit Mitnehmern für eine erfindungsgemässe Antriebseinrichtung vorzuschlagen, welche ein zuverlässiges und präzises Eintakten der Förderwagen im Mitnahmeabschnitt der Antriebseinrichtung erlaubt.

Diese Aufgabe wird durch die Merkmale des unabhängigen Anspruchs 16 gelöst.

Ferner ist es eine weitere Aufgabe der vorliegenden Erfindung, eine Vereinzelungsvorrichtung für eine erfindungsgemässe Förderanlage vorzuschlagen, welche eine zuverlässigere und beschleunigte Entlassung von Förderwagen in den Mitnahmeabschnitt der Antriebseinrichtung erlaubt.

Diese Aufgabe wird durch die Merkmale der unabhängigen Ansprüche 20 und 24 gelöst.

Die abhängigen Ansprüche, die Beschreibung und die Figuren beschreiben Weiterbildungen und besondere Ausführungsformen der Erfindung.

Die Erfindung betrifft also unter anderem eine Antriebseinrichtung für eine Hängeförderanlage zum Antreiben von entlang einer Mitnahme-Führungsschiene bewegbaren Förderwagen zur hängenden Förderung von Fördergütern, wobei die Antriebseinrichtung ein endlos umlaufendes, flexibles Antriebsorgan mit einer Mehrzahl von am Antriebsorgan angeordneten und voneinander beabstandeten Mitnehmern zum Mitnehmen von entlang der Mitnahme-Führungsschiene angeordneten Förderwagen sowie ein Antriebselement zum Antreiben des Antriebsorgans enthält. Die Mitnehmer sind also entlang des Antriebsorgans angeordnet.

Die Antriebseinrichtung umfasst erfindungsgemäss einen Grundkörper, welcher einen Aufnahmekanal aufweist bzw. ausbildet, in welchem das endlos umlaufende, flexible Antriebsorgan geführt bzw. angeordnet ist. Der Aufnahmekanal dient also der Aufnahme des Antriebsorgans.

Der Aufnahmekanal ist insbesondere umlaufend geschlossen ausgestaltet. Das heisst, der Aufnahmekanal ist insbesondere als geschlossene Kanalschlaufe ausgestaltet. Das Antriebsorgan verläuft insbesondere ausschliesslich bzw. vollständig im Aufnahmekanal.

Der Aufnahmekanal wird durch einen Kanalboden und seitliche, insbesondere zwei seitliche, voneinander beabstandete Kanalwände begrenzt. Der Aufnahmekanal ist insbesondere einseitig offen, z. B. nach oben offen. Der Begriff «oben» steht insbesondere in Bezug zur Schwerkraftrichtung.

Der Aufnahmekanal und mit diesem das Antriebsorgan verlaufen in Montagestellung insbesondere in einer im Wesentlichen horizontalen Ebene. Der Aufnahmekanal und mit diesem das Antriebsorgan verlaufen ganz besonders in einer horizontalen Ebene. Der Aufnahmekanal weist in Montagestellung entsprechend eine nach oben offene Kanalöffnung auf.

Gemäss einer Weiterbildung weist der Aufnahmekanal einen Mitnahmeabschnitt auf, entlang welchem Förderwagen von Mitnehmern des Antriebsorgans mitgenommen werden. Ferner weist der Aufnahmekanal einen Rückführabschnitt auf, in welchem das Antriebsorgan mit den Mitnehmern zurückgeführt wird.

Die Mitnehmer sind seitlich vom Antriebsorgan abstehende Bauteile, wie Nocken. Entsprechend werden die Mitnehmer auch als Mitnahmenocken bezeichnet.

Das Antriebsorgan wird im Aufnahmekanal insbesondere über einen bogenförmigen, wie U-förmigen, Kanalabschnitt vom Mitnahmeabschnitt in den Rückführabschnitt umgelenkt.

Das Antriebsorgan wird im Aufnahmekanal insbesondere über einen bogenförmigen, wie U-förmigen, Kanalabschnitt vom Mitnahmeabschnitt in den Rückführabschnitt umgelenkt.

Der Aufnahmekanal ist im Mitnahmeabschnitt mindestens über eine Teilstrecke, insbesondere über den gesamten Mitnahmeabschnitt bogenförmig ausgestaltet.

Gemäss einer Weiterbildung der Erfindung ist der Aufnahmekanal mindestens abschnittsweise als Führungskanal zum Führen des Antriebsorgans ausgebildet.

Der Führungskanal bzw. Führungskanalabschnitt ist insbesondere nutförmig, und ganz besonders U-förmig, ausgebildet.

Der Führungskanal bzw. Führungskanalabschnitt weist einen Kanalboden, bzw. Nutboden, und zwei seitliche, voneinander beabstandete Kanalwände bzw. Nutwände auf. Der Führungskanal ist über eine Kanalöffnung bzw. Nutöffnung einseitig offen.

Das Antriebsorgan wird durch die beiden Kanalwände des Führungskanals bzw. Führungskanalabschnitt insbesondere seitlich gestützt. Das Antriebsorgan wird durch die beiden Kanalwände des Führungskanals bzw. Führungskanalabschnitts insbesondere derart seitlich gestützt, dass dieses seitlich nicht ausweichen kann.

Gemäss einer Weiterbildung ist der Aufnahmekanal im Mitnahmeabschnitt als Führungskanal ausgebildet.

Gemäss einer Weiterbildung ist der Aufnahmekanal in Bewegungsrichtung des Antriebsorgans betrachtet im Bereich des Umlenkabschnitts vom Mitnahmeabschnitt in den Rückführabschnitt als Führungskanal ausgebildet.

Gemäss einer Weiterbildung ist der Aufnahmekanal in Bewegungsrichtung des Antriebsorgans betrachtet im Bereich des Umlenkabschnitts vom Rückführabschnitt in den Mitnahmeabschnitt als Führungskanal ausgebildet.

Der Aufnahmekanal weist im Rückführabschnitt insbesondere einen Funktionsbereich auf, in welchem der Aufnahmekanal zur Aufnahme von auf das Antriebsorgan einwirkenden Funktionselementen eine Verbreiterung aufweist.

Im Funktionsbereich des Aufnahmekanals kann insbesondere ein Antriebselement, wie z. B. ein Antriebsrad, angeordnet sein.

Ferner kann im Funktionsbereich des Aufnahmekanals eine Spannvorrichtung oder Teile davon, wie z.B. der Spannkörper einer Spannvorrichtung angeordnet sein.

Das flexible Antriebsorgan ist insbesondere länglich bzw. als Längskörper ausgebildet. Das Antriebsorgan kann ein Antriebsriemen oder ein Antriebsseil sein.

Das Antriebsorgan ist jedoch insbesondere eine Antriebskette.

Ein als Kette ausgebildetes Antriebsorgan mit Mitnehmern wird auch als Mitnehmerkette oder Nockenkette bezeichnet.

Das flexible Antriebsorgan ist insbesondere eine Rollenkette mit einer Mehrzahl von über seitlichen Verbindungslaschen miteinander verbundenen Rollen.

Die Rollenkette und der Führungskanal sind insbesondere so ausgebildet und aufeinander abgestimmt, dass die Rollen der Rollenkette entlang der Kanalwände des Führungskanals abrollen. Dadurch wird die Reibung zwischen der Antriebskette und der als Führungskanal ausgebildeten Kettenführung erheblich gesenkt.

Gemäss einer Weiterbildung der Antriebseinrichtung weisen beide Kanalwände des Führungskanalabschnittes eine längslaufende, seitliche Hinterschneidung auf. Die Rollenkette und die seitlichen Hinterschneidungen sind so ausgebildet und aufeinander abgestimmt, dass die zum Kanalboden hin angeordneten Verbindungslaschen der Rollenkette in die seitliche Hinterschneidung eingreifen und die Rollenkette so gegen eine in Richtung Kanalöffnung wirkende Zugkraft sichern.

Gemäss einer Weiterbildung übergreifen bzw. überragen die öffnungsseitigen Verbindungslaschen der Rollenkette die Kanalöffnung seitlich. Der Führungskanal und die Rollenkette mit ihren öffnungsseitigen, die Kanalöffnung seitlich überragenden Verbindungslaschen sind insbesondere so ausgebildet und aufeinander abgestimmt, dass die Rollenkette dem Kanalboden nicht aufliegt.

Das Antriebselement treibt das Antriebsorgan insbesondere über einen Kraft- und/oder Formschluss an. Das Antriebselement wird durch einen Antrieb, wie Elektromotor, angetrieben. Das Antriebselement ist insbesondere ein Antriebsrad, wie Kettenrad. Das Kettenrad kann z. B. eine Zahlung ausbilden, welche in die Glieder einer Antriebskette eingreift.

Der Grundkörper ist insbesondere einteilig ausgestaltet. Der Grundkörper kann aber auch mehrteilig ausgestaltet sein.

Der Grundkörper ist insbesondere ein Flächenelement. Dieses zeichnet sich durch seine gegenüber der Höhe (Dicke) wesentlich grössere Länge und Breite (2-dimensionale Ausdehnung) aus. Das Flächenelement weist zwei gegenüber liegende, ausgedehnte Flächenseiten sowie kurze Stirnseiten auf, welche die Flächenseiten miteinander verbinden.

Der Grundkörper ist insbesondere plattförmig bzw. als Plattenelement bzw. als Platte ausgebildet. Der Kanalboden ist gegenüber der Oberfläche des Plattenelementes entsprechend nach innen versetzt angeordnet.

Der Aufnahmekanal ist insbesondere in eine Flächenseite des Grundkörpers eingelassen bzw. eingearbeitet. Der Aufnahmekanal kann zum Beispiel mittels eines spanenden Verfahrens, wie Fräsen, aus dem Grundkörper herausgearbeitet sein.

Das Antriebsorgan ragt insbesondere über den Aufnahmekanal bzw. den Führungskanal hinaus. Bei einer Rollenkette erfolgt dies insbesondere mit den öffnungsseitigen Verbindungslaschen. D.h., das Antriebsorgan ragt insbesondere über die Flächenseite, zu welcher hin die Kanalöffnung angeordnet ist, hinaus. Das als Rollenkette ausgebildete Antriebsorgan ragt insbesondere mit seinen Verbindungslaschen über die Flächenseite, zu welcher hin die Kanalöffnung angeordnet ist, hinaus.

Der Grundkörper kann Durchbrüche aufweisen. Solche Durchbrüche dienen z. B. der Aufnahme von Verbindungselementen, wie Stifte oder Schrauben von Verbindungsschnittstellen. Durchbrüche können auch zur Aufnahme der Achsen eines Antriebsrades oder eines Spannrades einer Spannvorrichtung vorgesehen sein.

Der Grundkörper besteht insbesondere aus einem Kunststoff oder enthält einen solchen. So kann der Grundkörper ganz besonders aus einem PE-UHMW (Ultra-High-Molecular-Weight Polyethylene) bestehen oder einen solchen enthalten. Solche Kunststoffe sind auch unter dem Handelsnamen "Durogliss" bekannt.

So bestehen insbesondere die Kanalwände und der Kanalboden des Aufnahmekanals aus einem Kunststoff, insbesondere der oben genannten Art.

Gemäss einer Weiterbildung enthält die Antriebseinrichtung eine Spannvorrichtung mit einem Spannkörper zum Spannen des Antriebsorgans. Die Spannvorrichtung ist insbesondere in eine Ausnehmung bzw. Vertiefung im Grundkörper eingelassen bzw. in dieser angeordnet. Die Vertiefung im Grundkörper, welche die Spannvorrichtung aufnimmt, kann Teil des Aufnahmekanals sein.

Das Antriebsorgan ist über einen Führungsabschnitt des Spannkörpers geführt. Der Führungsabschnitt ist insbesondere bogenförmigen ausgebildet.

Der Spannkörper ist insbesondere ein Spannrad, über welches das Antriebsorgan geführt ist. Das Spannrad ist insbesondere drehbar bzw. frei drehbar gelagert. Ist das Antriebsorgan eine Rollenkette, so braucht das Spannrad allerdings nicht zwingend drehbar bzw. frei drehbar gelagert zu sein.

Die Spannvorrichtung ist insbesondere mindestens teilweise im Funktionsbereich des Aufnahmekanals angeordnet. So ist insbesondere der Spannkörper der Spannvorrichtung im Funktionsbereich des Aufnahmekanals angeordnet.

Ist das Antriebsorgan eine Antriebskette, so ist die Spannvorrichtung eine Kettenspannvorrichtung. Der Spannkörper ist insbesondere ein Kettenspannrad.

Die Spannvorrichtung ist insbesondere als Selbstspannvorrichtung ausgelegt. Das heisst, das Antriebsorgan muss nicht durch manuelle Eingriffe an der Spannvorrichtung nachgespannt werden. Das Antriebsorgan wird durch die Spannvorrichtung vielmehr selbsttätig nachgespannt.

Der Grundkörper der Antriebseinrichtung bildet zusammen mit im Aufnahmekanal umlaufenden geführten Antriebsorgan eine Baugruppe bzw. Baueinheit aus.

Optional können ein oder mehrere der nachfolgenden Merkmale Teil der genannten Baugruppe bzw. Baueinheit sein:
- Spannvorrichtung;
- Antriebselement;
- Antrieb.

Ein unabhängiger Erfindungsaspekt betrifft nun auch eine Selbstspannvorrichtung für das flexible Antriebsorgan einer oben beschriebenen bzw. erfindungsgemässen Antriebseinrichtung mit den oben genannten Merkmalen.

Die Selbstspannvorrichtung enthält erfindungsgemäss ebenfalls ein auf ein endlos umlaufendes, flexibles Antriebsorgan einwirkender Spannkörper. Der Spannkörper kann wie oben erwähnt ein drehbar oder nicht drehbar gelagertes Spannrad bzw. Spannrolle sein.

Ferner umfasst die Selbstspannvorrichtung insbesondere ein Federelement, wie Druckfeder, welches direkt oder indirekt eine Druckkraft auf den Spannkörper und über diesen auf das Antriebsorgan ausübt.

Gemäss einer Weiterbildung enthält die Selbstspannvorrichtung eine mit dem Spannkörperverbundene Spannachse, eine die Spannachse umgebende Druckfeder zur Ausübung einer Druckkraft auf den Spannkörper sowie insbesondere eine Rücklaufsperre zur Verhinderung eines Zurückweichens des Spannkörpers.

Die Selbstspannvorrichtung weist insbesondere eine physische Spannachse, z. B. in Form eines Stabes auf, welche mit dem Spannkörper verbunden ist. Die Druckfeder ist insbesondere eine Schraubenfeder, welche über die Spannachse geschoben ist bzw. diese umgibt.

Die Spannachse verläuft entsprechend parallel zum Kraftvektor der Druckfeder. Die Spannachse ist insbesondere in einem Spannachskanal im Grundkörper angeordnet und geführt. Der Spannachskanal ist so ausgelegt, dass die Spannachse trotz Vorspannung durch die Druckfeder nicht aufgrund von Querkräften seitlich ausweichen kann.

Der Spannkörper ist insbesondere an einer Halterung befestigt, welche auch mit der Spannachse verbunden ist. Die Spannvorrichtung ist so ausgelegt, dass die Druckfeder zum (Nach-)Spannen des Antriebsorgans den Spannkörper zusammen mit der Halterung und der Spannachse über die ausgeübte Druckkraft parallel zur Spannachse zum Antriebsorgan hin zu drücken bzw. verschieben vermag. Das heisst, die Halterung ist unter Ausübung einer Spannkraft auf das Antriebsorgan zusammen mit dem Spannkörper und der Spannachse relativ zum Grundkörper zum Antriebsorgan hin verschiebbar.

Die Druckfeder ist hierzu mit ihrem dem Spannkörper entfernten Ende direkt oder indirekt am Grundkörper, z. B. an einer Wand des Grundkörpers, abgestützt. Die Druckfeder kann z. B. über ein Anschlagelement mit Durchgangsöffnung, durch welche die Spannachse geführt ist, in der Vertiefung des Grundkörpers indirekt an einer Wand des Grundkörpers abgestützt sein. Das Anschlagelement kann plattenförmig sein. Das Anschlagelement kann z. B. als Lochblech ausgebildet sein.

Der Spannkörper ist grundsätzlich fest mit der Halterung verbunden. Der Spannkörper kann jedoch zur erstmaligen, manuellen Einstellung der Spannung über eine lösbare Verbindung relativ zur Halterung verschiebbar sein. So müssen z. B. bei der Montage der Spannvorrichtung am Grundkörper zur erstmaligen Einstellung der Spannung des Antriebsorgans die Position des Antriebsorgans und des Spannkörpers aufeinander abgestimmt werden.

Die Halterung kann hierzu einen in der Längsachse der Spannachse ausgerichteten Führungsschlitz aufweisen, durch welchen ein Achsabschnitt des Spannkörpers geführt und auf der Gegenseite fixiert bzw. verschraubt ist.

Das Nachspannen des Antriebsorgan während des Förderbetriebes erfolgt jedoch selbststätig durch die Spannvorrichtung bzw. durch deren Druckfeder.

Die Selbstspannvorrichtung kann in einer Weiterbildung eine Rücklaufsperre zur Verhinderung eines Zurückweichens des Spannkörpers entgegen der auf den Spannkörper wirkenden Druckkraft der Druckfeder enthalten. Dadurch wird verhindert, dass bei einem unruhigen Lauf des Antriebsorgans, der Spannkörper sich ständig vor- und zurück bewegt.

Die Rücklaufsperre kann ein Sperrelement mit einer Durchgangsöffnung umfassen, durch welche die Spannachse geführt ist. Das Sperrelement kann plattenförmig sein. Das Sperrelement kann z. B. als Lochblech ausgebildet sein. Das Sperrelement wirkt insbesondere mit einem Federelement, wie Druckfeder, zusammen, welches dazu ausgelegt ist, das Sperrelement in der Vertiefung des Grundkörpers in eine Schrägstellung gegenüber der Spannachse zu verschieben. Dadurch verkantet sich das Sperrelement gegenüber der Spannachse in der Vertiefung des Grundkörpers, so dass die Spannachse nicht mehr durch die Durchgangsöffnung des Sperrelementes zurückweichen kann. Das Sperrelement wird durch das Verkanten gegenüber der Spannachse verspannt.

Die Spannvorrichtung ist insbesondere als Montageeinheit ausgebildet, welche in die Vertiefung im Grundkörper eingelegt wird.

Die Antriebseinrichtung ist insbesondere als Montageeinheit ausgebildet und weist entsprechend Befestigungsschnittstellen auf, über welche die Antriebseinrichtung, z. B. über Schraubverbindungen, an einer Tragstruktur der Förderanlage befestigbar ist. Die Antriebseinrichtung ist insbesondere oberhalb der Tragstruktur angeordnet. Die Antriebseinrichtung liegt der Tragstruktur über die Befestigungsschnittstellen insbesondere auf.

Die Tragstruktur kann z. B. ein Plattenelement bzw. Blechelement sein oder beinhalten.

Die Erfindung betrifft ferner auch eine Förderweiche für eine Hängeförderanlage zum hängenden Fördern von Fördergütern mit einer oben beschriebenen Antriebseinrichtung. Die Förderweiche enthält ferner eine Mitnahme-Führungsschiene.

Die Förderweiche umfasst insbesondere auch eine Zuförder-Führungsschiene, eine Weiterförder-Führungsschiene und eine mit der Weiterförder-Führungsschiene verbundene, bewegbare Leitschiene, auch Weichen-Führungsschiene genannt. Die Leitschiene ist mit einem freien Ende zwischen der Zuförder-Führungsschiene und der Mitnahme-Führungsschiene bewegbar, insbesondere schwenkbar.

Mittels der Förderweiche können Förderwagen wahlweise von der Zuförder-Führungsschiene oder der Mitnahme-Führungsschiene über die Leitschiene der Weiterförder-Führungsschiene zugeführt werden. Hierzu wird das freie Ende der Leitschiene entweder in Flucht mit der Zuförder-Führungsschiene oder in Flucht mit der Mitnahme-Förderschiene gebracht.

Die Förderweiche kann zum z. B. Einschleusen bzw. Eintakten von Förderwagen über die Mitnahme-Führungsschiene auf eine durch die Weiterförder-Führungsschiene ausgebildete Förderstrecke der Förderanlage dienen. So können mittels der Förderweiche beispielsweise Förderwagen mit leeren Taschen aus einem Leertaschenspeicher auf eine Förderstrecke eingetaktet werden.

Die Förderweiche kann auch zum Ausschleusen von Förderwagen aus einer durch die Weiterförder-Führungsschiene ausgebildeten Förderstrecke über die Mitnahme-Führungsschiene der Förderanlage dienen. So können mittels der Förderweiche beispielsweise Förderwagen mit Taschen, welche Fördergüter aufnehmen, aus der Förderstrecke ausgeschleust und einer Speichereinrichtung zur Zwischenspeicherung zugefördert werden.

Die Mitnahme-Führungsschiene weist in einem Mitnahmeabschnitt insbesondere einen bogenförmigen Verlauf auf. Der bogenförmige Verlauf ist insbesondere derart, dass die Mitnahme-Führungsschiene in einem spitzen Winkel auf die Wegförder-Führungsschiene zuläuft.

Der Mitnahmeabschnitt des Aufnahmekanals der Antriebseinrichtung verläuft insbesondere neben dem Mitnahmeabschnitt der Mitnahme-Führungsschiene und verläuft ganz besonders parallel zum Mitnahmeabschnitts der Mitnahme-Führungsschiene.

Der den Aufnahmekanal ausbildende Grundkörper ist insbesondere ein von der bzw. den oben genannten Führungsschienen für den Förderwagen unabhängiges bzw. separates Bauteil bzw. eine unabhängige bzw. separate Baugruppe.

Das flexible Antriebsorgan kann wie oben oder wie nachfolgend beschrieben ausgebildet sein.

Ein weiterer unabhängiger Erfindungsaspekt betrifft auch ein flexibles Antriebsorgan, insbesondere der oben beschriebenen Art, mit einer Mehrzahl von entlang des Antriebsorgans an diesem angeordneten und voneinander beabstandeten Mitnehmern, insbesondere für eine oben beschriebene bzw. erfindungsgemässe Antriebseinrichtung.

Das flexible Antriebsorgan zeichnet sich insbesondere dadurch aus, dass in Bewegungsrichtung des Antriebsorgans betrachtet am Antriebsorgan jeweils vor dem Mitnehmer eine Sperrklinke mit einem entgegen der Bewegungsrichtung des Antriebsorgans schwenkbaren Klinkenfinger angeordnet ist.

Die Mitnehmer sind insbesondere an vorstehenden Befestigungselementen, wie Bolzen, Stifte oder Schrauben des Antriebsorgans befestigt. Die Befestigungselemente stehen z. B. seitlich vor bzw. ragen aus der Kanalöffnung hinaus, bzw. ragen seitlich aus der Kanalöffnung hinaus.

Die Mitnehmer sind insbesondere über die nach oben offene Kanalöffnung mit dem Antriebsorgan verbunden.

Die Mitnehmer ragen insbesondere seitlich von der nach oben offenen Kanalöffnung weg.

Die Mitnehmer ragen insbesondere quer zu den Kanalwänden seitlich vom Führungskanal weg.

Die Verbindung mit dem Antriebsorgan und insbesondere mit den seitlich vorstehenden Befestigungselementen, wie Bolzen oder Stiften, kann eine Form- oder Reibschlussverbindung oder eine Kombination davon sein.

Erfindungsgemäss ist am Antriebsorgan, wie erwähnt, in Bewegungsrichtung des Antriebsorgans betrachtet, jeweils vor dem Mitnehmer und nach bzw. hinter dem nachfolgenden Mitnehmer eine Sperrklinke mit einem zwischen einer Spreizstellung und einer Überfahrstellung bewegbaren, insbesondere schwenkbaren Klinkenfinger, angeordnet.

Der Klinkenfinger, auch Klinkenzinke oder Klinkenkralle genannt, steht in der Spreizstellung vom Antriebsorgan ab. In der Überfahrstellung ist der Klinkenfinger zum Antriebsorgan hin geschwenkt und liegt diesem insbesondere an.

Der Klinkenfinger ist insbesondere mit einer entgegen der Bewegungsrichtung des Antriebsorgans gerichteten Bewegungskomponente von der Spreizstellung in die Überfahrstellung schwenkbar.

Gemäss einer Weiterbildung enthält die Sperrklinke ein Gegenelement, wobei der Klinkenfinger schwenkbar, z. B. über eine Gelenkverbindung, am Gegenelement angeordnet bzw. befestigt ist.

Gemäss einer Weiterbildung ist die Sperrklinke über das Gegenelement am Antriebsorgan befestigt.

Die Sperrklinken sind insbesondere an seitlich vorstehenden Befestigungselementen, wie Bolzen oder Stiften des Antriebsorgans befestigt. Die Verbindung mit dem Antriebsorgan bzw. den Befestigungselementen des Antriebsorgans, insbesondere mit den seitlich vorstehenden Bolzen oder Stiften, kann eine Form- oder Reibschlussverbindung oder eine Kombination davon sein. Die Verbindung ist insbesondere eine Schnapp- bzw. Clipverbindung.

Ist das Antriebsorgan eine Antriebskette, wie Rollenkette, so verlaufen die aus der Kanalöffnung vorstehenden Befestigungselemente, wie Befestigungsbolzen bzw. Befestigungsstifte, insbesondere parallel zu den Verbindungsachsen der Kettenglieder bzw. parallel zu den Rollenachsen der Rollen einer Rollenkette aus.

Ist das Antriebsorgan eine Antriebskette, wie Rollenkette, so bilden die seitlich bzw. aus der Kanalöffnung vorstehenden Befestigungselemente, wie Befestigungsbolzen bzw. Befestigungsstifte, insbesondere Achsverlängerungen von Kettengliedern, insbesondere von den Rollen einer Rollenkette aus.

Die Sperrklinken und die Mitnehmer sind jeweils insbesondere unabhängig voneinander an Befestigungselementen des Antriebsorgans befestigt. Das heisst, die Sperrklinken und die Mitnehmer sind an unterschiedlichen Befestigungselementen am Antriebsorgan befestigt.

Die Sperrklinke umfasst insbesondere Rückstellmittel zur Rückstellung des Klinkenfingers in die Spreizstellung, in welcher der Klinkenfinger vom Antriebsorgan gegen aussen absteht und eine Vorlaufsperre für einen Förderwagen ausbildet.

Die Sperrklinke wirkt wie folgt: bewegt sich beispielsweise ein Förderwagen mit zu viel Schwung und entsprechend zu schnell in den Mitnahmebereich der Mitnahme-Führungsschiene, so lauft dieser auf einen vorlaufenden Mitnehmer im Mitnahmebereich auf und wird durch diesen gestoppt. Der Förderwagen wird durch diesen abrupten Stopp wieder zurückgeworfen und bewegt sich entgegen der Förderrichtung über den Klinkenfinger der Sperrklinke und überfährt diese. Der Klinkenfinger wird dabei entgegen der auf diesen wirkende Rückstellkraft gegen das Antriebsorgan bzw. gegen das Gegenelement der Sperrklinke in die Überfahrstellung gedrückt bzw. geschwenkt.

Sobald der Förderwagen den Klinkenfinger überfahren hat, wird dieser durch die auf den Klinkenfinger wirkende Rückstellkraft wieder in die Spreizstellung zurückbewegt bzw. zurückgeschwenkt und bildet eine Vorlaufsperre für den Förderwagen aus. Der entgegen der Förderrichtung zurückweichende Förderwagen wird nach dem Überfahren des Klinkenfingers durch den nachfolgenden Mitnehmer aufgehalten und mitgenommen. Der Klinkenfinger in der Spreizstellung bildet für den sich nun wieder in Förderrichtung bewegende Förderwagen einen Anschlag aus. Der Förderwagen ist nun zwischen der Sperrklinke und dem Mitnehmer in einer taktgenauen Position gefangen.

Das erfindungsgemässe Antriebsorgan erlaubt dank der Sperrklinke auch bei ungenauer Abgabe der Förderwagen durch die Vereinzelungsvorrichtung eine taktgenaue Übernahme der Förderwagen durch die Mitnehmer des Antriebsorgans. Ferner erlaubt das erfindungsgemässe Antriebsorgan dank der Sperrklinke auch bei unruhigem bzw. ungleichmässigem Bewegungsverhalten der Förderwagen nach deren Freigabe durch die Vereinzelungsvorrichtung eine taktgenaue Übernahme der Förderwagen durch die Mitnehmer des Antriebsorgans. Die Sperrklinke garantiert also ein taktsynchrones Eintakten der Förderwagen im Mitnahmeabschnitt.

Entsprechend steht der Vereinzelungsvorrichtung ein grösseres Zeitfenster für eine taktsynchrone Abgabe der Förderwagen in den Mitnahmeabschnitt zur Verfügung. Eine präzise Entlassung der Förderwagen für eine taktsynchrone Übernahme durch die Mitnehmer im Mitnahmeabschnitt, wie dies bei bestehenden Vorrichtungen z. B. über ein Schneckenrad erfolgt, ist nicht notwendig.

Die Rückstellmittel können Federelemente, wie Druck- oder Zugfedern sein.

Gemäss einer Weiterbildung ist sowohl am Klinkenfinger als auch am Gegenelement jeweils ein Magnet von gleicher Polung derart angeordnet, dass die Magnete eine Rückstellkraft auf den Klinkenfinger ausüben, mittels welcher der Klinkenfinger in eine Spreizstellung bewegt wird, in welcher der Klinkenfinger vom Antriebsorgan gegen aussen absteht und eine Vorlaufsperre für einen Förderwagen ausbildet.

Das heisst, gemäss dieser Weiterbildung umfassen die weiter oben genannten Rückstellmittel jeweils mindestens ein, sowohl am Klinkenfinger als auch am Gegenelement angeordneter Magnet von gleicher Polung. Die Magnete sind so angeordnet, dass sich diese gegenseitig abstossen und so eine Rückstellkraft auf den Klinkenfinger in die Spreizstellung ausüben.

Ein weiterer unabhängiger Erfindungsaspekt betrifft auch eine Vereinzelungsvorrichtung und einzelnen Freigeben von entlang einer Führungsschiene geführten Förderwagen einer Hängeförderanlage. Die Vereinzelungsvorrichtung dient insbesondere auch zum Zurückhalten von entlang einer Führungsschiene geführten Förderwagen einer Hängeförderanlage.

Die Vereinzelungsvorrichtung enthält ein Rückhalteorgan, welches die Förderwagen über einen Rückhaltekontakt, insbesondere entlang der Führungsschiene, zurückbehält, und welches zwecks Aufhebung des Rückhaltekontakts und Entlassen eines einzelnen Förderwagens in einen Führungsschienenabschnitt, insbesondere in einen Mitnahmeabschnitt der Führungsschiene über eine Steuerungseinrichtung betätigbar ist.

Die Vereinzelungsvorrichtung zeichnet sich erfindungsgemäss durch ein Anschuborgan aus, welches derart ausgebildet und durch die Steuerungseinrichtung betätigbar ist, dass das Anschuborgan mit der Aufhebung des Rückhaltekontaktes und der Entlassung eines einzelnen Förderwagens in den Führungsschienenabschnitt, insbesondere in den Mitnahmeabschnitt auf den Förderwagen unter Ausbildung eines Anschubkontaktes eine Beschleunigungskraft in Förderrichtung ausübt.

Die Vereinzelungsvorrichtung ist insbesondere ortsfest an der Hängeförderanlage angeordnet.

Die Vereinzelungsvorrichtung ist insbesondere als Baugruppe ausgebildet.

Gemäss einer Weiterbildung sind das Rückhalteorgan und das Anschuborgan so ausgelegt, dass diese auf ein gemeinsames Kontaktorgan, wie Kontaktzapfen, am Förderwagen einwirken.

Das Rückhalteorgan ist in der Rückhalteposition bzw. bei der Ausbildung eines Rückhaltekontaktes in Förderrichtung betrachtet insbesondere vor dem Kontaktorgan angeordnet.

Das Anschuborgan wirkt beim Anschieben des Förderwagens insbesondere mit einer Bewegungskomponente parallel zur Förderrichtung und ganz besonders von hinten auf das Kontaktorgan ein.

Gemäss einer Weiterbildung werden das Rückhalteorgan und das Anschuborgan über einen gemeinsamen Aktuator betätigt. Der Aktuator ist insbesondere ein Pneumatikzylinder mit beweglichem Kolben. Der Aktuator kann aber auch ein Hydraulikzylinder oder Motor, wie Linearmotor sein.

Gemäss einer Weiterbildung werden das Rückhalteorgan und das Anschuborgan über den Aktuator gleichzeitig betätigt.

Gemäss einer Weiterbildung sind das Rückhalteorgan und das Anschuborgan an einem gemeinsamen Kraftübertragungsorgan angeordnet. Sie werden durch Bewegen des Kraftübertragungsorgans durch den Aktuator gemeinsam bzw. gleichzeitig betätigt.

Ist der Aktuator ein Pneumatik- oder Hydraulikzylinder so ist der bewegliche Kolben des Pneumatik- bzw. Hydraulikzylinders mit dem Kraftübertragungsorgan verbunden. Eine Bewegung des Kolbens wird auf das Kraftübertragungsorgan und von diesem auf das Rückhalteorgan und das Anschuborgan übertragen.

Das dazugehörige Verfahren zum Betreiben einer oben beschriebenen Vereinzelungsvorrichtung zeichnet sich durch folgende Schritte aus:
- Zurückhalten eines Förderwagens durch Ausbilden eines Rückhaltekontaktes mittels des Rückhalteorgans;
- Aufheben des Rückhaltekontaktes durch Betätigen des Rückhalteorgans und Entlassen bzw. Freigabe des Förderwagens in den Mitnahmeabschnitt;
- Einwirken einer in Förderrichtung gerichtete Beschleunigungskraft auf den Förderwagen durch Herstellen eines Anschubkontaktes mittels des Anschuborgans und dadurch;
- Bewegen des Förderwagens in den Mitnahmeabschnitt der förderanlage und
- Mitnahme des Förderwagens durch einen Mitnehmer.

Die Vereinzelungsvorrichtung findet insbesondere Einsatz in einer Förderweiche einer Hängeförderanlage, wie oben beschrieben. Der Mitnahmeabschnitt der Mitnahme-Führungsschiene ist in Förderrichtung betrachtet insbesondere vor der Vereinzelungsvorrichtung angeordnet.

Die Hängeförderanlage kann stromaufwärts von der Vereinzelungsvorrichtung entlang der Führungsschiene eine Staustrecke für Förderwagen ausbilden, welche von der Vereinzelungsvorrichtung zurückgehalten werden.

Die Erfindung betrifft auch eine Hängeförderanlage zum hängenden Fördern von Fördergütern mit einer Mitnahme-Führungsschiene und einer Mehrzahl von entlang der mindestens einen Mitnahme-Führungsschiene bewegbaren Förderwagen zum Fördern von Fördergütern sowie mit einer oben beschriebenen bzw. erfindungsgemässen Antriebseinrichtung.

Die Förderwagen der Hängeförderanlage sind insbesondere als Einzelwagen ausgebildet. Das heisst, die Förderwagen sind unabhängig voneinander entlang einer Förderstrecke bewegbar.

Die Hängeförderanlage ist insbesondere als Gravitationsförderer ausgebildet. Ein Gravitationsförderer zeichnet sich insbesondere dadurch aus, dass die Förderwagen mittels angetriebenen Mitnehmern entlang eine Steigstrecke auf ein höheres Niveau gefördert werden und sich anschliessend entlang einer abfallenden Förderstrecke mit Schwerkraftunterstützung durch die Förderanlage bewegen.

Die erfindungsgemässe Hängeförderanlage dient z. B. zum Sortieren, Kommissionieren, Einlagern oder Auslagern von Fördergütern, wie Stückgütern, oder einer Kombination davon.

Gemäss einer Weiterbildung enthält die Hängeförderanlage eine oben genannte bzw. erfindungsgemässe Förderweiche, wobei die erfindungsgemässe Antriebseinrichtung und die Mitnahme-Führungsschiene Teil der Förderweiche sind.

Gemäss einer Weiterbildung enthält die Hängeförderanlage eine oben beschriebene bzw. erfindungsgemässe Vereinzelungsvorrichtung, wie oben beschrieben.

Die Antriebseinrichtung der Hängeförderanlage enthält insbesondere ein weiter oben beschriebenes flexibles Antriebsorgan.

Die erfindungsgemässe Antriebseinrichtung zeichnet sich gegenüber vergleichbaren Antriebseinrichtungen aus dem Stand der Technik durch eine Bauteilereduktion, eine hohe Verschleissfestigkeit, einen leichten Lauf, eine hohe Widerstandsfähigkeit gegen Abrieb, eine hohe temperaturbeständig, einen geringen Verzug des Antriebsorgans sowie tiefere Fertigungs- und Montagekosten aus. Die Bauteile und insbesondere das Antriebsorgan müssen entsprechend weniger oft ausgewechselt werden.

Die Bauteilereduktion erlaubt eine einfachere und schnellere Montage der Antriebseinrichtung.

So werden bei der erfindungsgemässen Antriebseinrichtung keine Umlenk- und Führungsräder bzw. -rollen benötigt, welche ausschliesslich der Führung bzw. Umlenkung des Antriebsorgans dienen.

Dank der Führung des Antriebsorgans im Aufnahmekanal kann die Antriebseinrichtung mit einer geringeren Spannung des Antriebsorgans betrieben werden. Entsprechend kann die Spanneinrichtung für eine geringere Spannung des Antriebsorgans ausgelegt werden. So kann die von der Spanneinrichtung auf das Antriebsorgan ausgeübte Kraft zur Erzeugung der für den Betrieb notwendigen Spannung das Antriebsorgans lediglich 5 - 50 Newton, insbesondere 5 - 10 Newton betragen.

Die obgenannten Vorteile führen auch zu einer geringeren Belastung der Antriebsmotoren. Gegebenenfalls können sogar kostengünstigere Antriebsmotoren mit geringerer Leistung eingesetzt werden.

Ferner ist der Betrieb der erfindungsgemässen Antriebseinrichtung geräuschärmer. Dies weil einerseits weniger bewegte Bauteile, wie Umlenk- und Führungsräder, verbaut sind. Andererseits bewegt sich in vorliegender Antriebseinrichtung Metall auf Kunststoff.

Des Weiteren kann das Antriebsorgan bei der erfindungsgemässe Antriebseinrichtung einfach in den Aufnahmekanal eingelegt werden. Eine Ausrichtung und Justierung des Antriebsorgans ist nicht notwendig, da die Kettenposition in Aufnahmekanal vorgegeben ist.

Des Weiteren ermöglicht die erfindungsgemässe Antriebseinrichtung im Mitnahmeabschnitt eine gleichmässige Führung des Antriebsorgans entlang einer Bogen- bzw. Kurvenbahn.

Dank der Führung des Antriebsorgans im Aufnahmekanal lässt sich dieses auch besser schmieren, sofern eine Schmierung notwendig ist. So verhindern die Kanalwände und der Kanalboden ein Entweichen des Schmiermittels.

Die erfindungsgemässe Spannvorrichtung erlaubt das selbsttätige Nachspannen des Antriebsorgans ohne manuellen Eingriff. Sie ist einfach aufgebaut und lässt sich als Einbaumodul schnell und einfach, das heisst ohne grossen Montageaufwand in die Antriebseinrichtung einbauen bzw. einsetzen.

Das erfindungsgemässe Antriebsorgan mit Sperrklinke erlaubt eine taktgetreue, präzise Übergabe von Förderwagen an Mitnehmer im Mitnahmebereich. Dies auch bei einer nicht taktgenauen Entlassung der Förderwagen aus der Vereinzelungsvorrichtung oder bei einem ungleichmässigen Laufverhalten der Förderwagen bei ihrer Entlassung.

Die erfindungsgemässe Vereinzelungsvorrichtung ermöglicht die Entlassung von Förderwagen in den Mitnahmebereich mit entsprechendem Anschub. Die Förderwagen können entsprechend auch aus eine horizontalen Förderstrecke in den Mitnahmeabschnitt entlassen werden. Die Erzeugung des Anschubs erfolgt mit technisch einfachen Mitteln. Eine separate Ansteuerung zusätzlicher Bauteile ist nicht notwendig. Ferner kann auch auf ein Schneckenrad zum Befördern der Förderwagen aus der Vereinzelungsvorrichtung in den Mitnahmeabschnitt verzichtet werden.

Nachfolgend wird der Erfindungsgegenstand anhand von Ausführungsbeispielen, welche in den beiliegenden Figuren dargestellt sind, näher erläutert. Es zeigen jeweils schematisch eine:
- Figur 1:: Ansicht einer aus dem Stand der Technik bekannten Förderanlage aus dem Bereich einer Mitnahmeeinrichtung für Förderwagen von unten;
- Figur 2:: Ansicht einer Förderanlage aus dem Bereich der erfindungsgemässen Antriebseinrichtung von oben;
- Figur 3:: Ansicht der erfindungsgemässen Antriebseinrichtung von oben;
- Figur 4:: perspektivische Ansicht einer erfindungsgemässen Antriebskette;
- Figur 5:: perspektivische Ansicht einer Sperrklinke;
- Figur 6:: Explosionsansicht der Sperrklinke nach Figur 5;
- Figur 7:: Querschnittsansicht durch den Grundkörper der Antriebseinrichtung mit nutförmigem Führungskanal;
- Figur 8:: Ansicht der erfindungsgemässen Antriebseinrichtung aus dem Bereich der Umlenkung vom Rückführabschnitt in den Mitnahmeabschnitt von oben;
- Figur 9a:: vergrösserte perspektivische Ansicht der Sperrklinke nach Figur 6 von vorne;
- Figur 9b:: vergrösserte perspektivische Ansicht der Sperrklinke nach Figur 6;
- Figur 10:: Ansicht der erfindungsgemässen Antriebseinrichtung aus dem Bereich der Kettenspannvorrichtung von oben;
- Figure 11:: Querschnittsansicht eines an einer Führungsschiene angeordneten Förderwagens;
- Figur 12a:: perspektivische Ansicht einer an einem Förderwagen hängend geförderten Fördertasche mit in Förderrichtung nachlaufendem Aufnahmeabteil;
- Figur 12b:: perspektivische Ansicht einer an einem Förderwagen hängend geförderten Fördertasche mit in Förderrichtung vorlaufendem Aufnahmeabteil;
- Figur 13a:: Seitenansicht einer Vereinzelungsvorrichtung in Rückhaltestellung;
- Figur 13b:: Seitenansicht einer Vereinzelungsvorrichtung in Freigabestellung.

Die nachfolgend beschriebenen Ausführungsbeispiele stehen lediglich beispielhaft für den Erfindungsgegenstand und haben keine beschränkende Wirkung. Grundsätzlich sind in den Figuren gleiche Teile mit gleichen Bezugszeichen versehen.

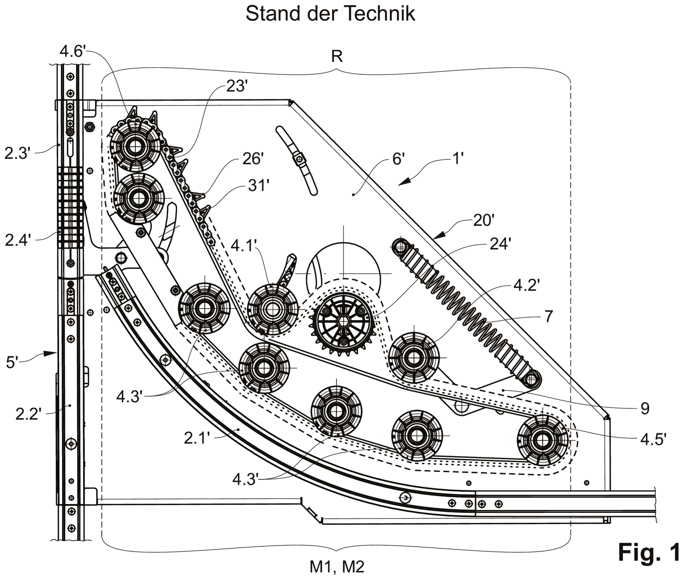

Die **Figur** 1 zeigt die Förderweiche 5' einer Hängeförderanlage 1' wie sie aus dem Stand der Technik, z. B. aus der EP 3 502 015 A1, bekannt ist. Die Förderweiche 5' enthält eine bewegliche Leitschiene 2.4' zum wahlweisen Leiten von Förderwagen 10 von einer Mitnahme-Führungsschiene 2.1' oder von einer Zuförder-Führungsschiene 2.2' auf eine Weiterförder-Führungsschiene 2.3'. Die bewegliche Leitschiene 2.4' hat dementsprechend eine Weichenfunktion und ist durch die Steuerungseinrichtung der Förderanlage 1' schaltbar. Die Förderwagen 10 rollen über Laufrollen 11a entlang der Führungsschiene 2 ab.

Die Förderweiche 5' enthält ferner eine Antriebseinrichtung 20' mit einer Antriebskette 23', an welcher eine Vielzahl von gleichmässig voneinander beabstandeten Mitnehmer 26' zum Mitnehmen von Förderwagen 10 angeordnet sind. Die Förderwagen 10 werden entlang eines bogenförmigen Mitnahmeabschnittes M2 der Mitnahme-Führungsschiene 2.1' durch die Mitnehmer 26' aktiv mitgenommen und zur Weiterförder-Führungsschiene 2.3' hin bewegt.

Die Antriebskette 23' der Antriebseinrichtung 20' wird durch ein Kettenrad 24' angetrieben. Beidseits vom angetriebenen Kettenrad 24' ist jeweils ein Kettenführungsrad 4.1', 4.2' angeordnet. Das in Bewegungsrichtung K der Antriebskette 23' zweite Kettenführungsrad 4.2' hat die Funktion eines Kettenspannrades, über welches die Kettenspannung eingestellt wird. Zur Einstellung der Kettenspannung wird mittels einer Zugfeder 7, welche über eine Kniehebelanordnung 9 auf das Kettenspannrad 4.2' einwirkt, eine Druckkraft vom Kettenspannrad 4.2' auf die Antriebskette 23' ausgeübt.

Die Antriebskette 23' verläuft entlang eines Mitnahmeabschnitts M1 neben dem bogenförmigen Mitnahmeabschnittes M2 der Mitnahme-Führungsschiene 2.1'. Die Antriebskette 23' wird am Ende des Mitnahmeabschnittes M1 über ein Umlenkrad 4.6' in einer U-förmigen Umlenkung vom Mitnahmeabschnitt M1 in einen Rückführabschnitt R geführt, in welchem die Antriebskette 23' zurückgeführt wird. Am Ende des Rückführabschnitts R wird die Antriebskette 23' über ein weiteres Umlenkrad 4.5' in einer U-förmigen Umlenkung wieder in den Mitnahmeabschnitt M1 umgelenkt.

Damit die Antriebskette 23' mit ihren Mitnehmern 26' im Mitnahmeabschnitt M1 möglichst parallel zum bogenförmigen Mitnahmeabschnitt M2 der Mitnahme-Führungsschiene 2.1' verläuft, ist die Antriebskette 23' im Mitnahmeabschnitt M1 um eine Mehrzahl von in Bewegungsrichtung der Antriebskette 23' hintereinander angeordneten Führungsrädern 4.3' geführt.

Die in einer horizontalen Ebene verlaufende Antriebskette 23' ist über die Umlenkund Führungsräder 4.1'-4.6' an einer darüber liegenden Tragstruktur 6' befestigt.

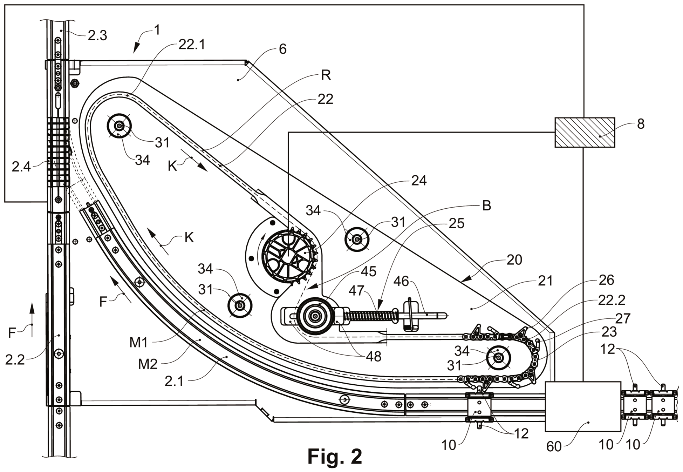

Die **Figur 2** zeigt eine gattungsgemässe Förderweiche 5 einer Hängeförderanlage 1 mit einer erfindungsgemässen Antriebseinrichtung 20, wie sie nachfolgend im Detail beschrieben wird.

Die Förderweiche 5 enthält ebenfalls eine bewegliche Leitschiene 2.4 zum wahlweisen Leiten von Förderwagen 10 von einer Mitnahme-Führungsschiene 2.1 oder von einer Zuförder-Führungsschiene 2.2 auf eine Weiterförder-Führungsschiene 2.3. Die Leitschiene 2.4 ist fluchtend mit der Weiterförder-Führungsschiene 2.3 verbunden und weist ein freies Ende auf. Mit ihrem freien Ende ist die Leitschiene 2.4 wahlweise in eine fluchtende Stellung mit der Zuförder-Führungsschiene 2.2 oder der Mitnahme-Führungsschiene 2.1 bringbar, insbesondere schwenkbar. Die bewegliche Leitschiene 2.4 hat dementsprechend eine Weichenfunktion und ist durch die Steuerungseinrichtung 8 der Hängeförderanlage 1 schaltbar.

Die Leitschiene 2.4 ist als biegsamer Kanalabschnitt ausgebildet, welcher sich aus einer Mehrzahl von Kanalsegmenten zusammensetzt, die über Federstahlelemente flexibel miteinander verbunden sind.

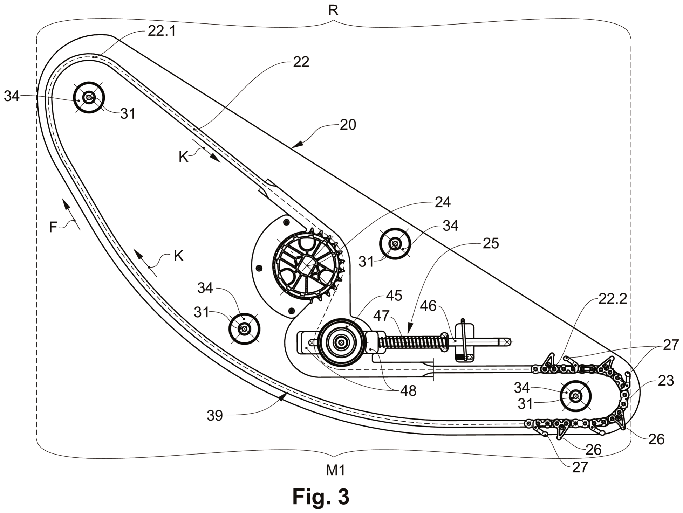

Die Förderweiche 5 enthält des Weiteren eine erfindungsgemässe Antriebseinrichtung 20 mit einer Antriebskette 23, an welcher in Längsrichtung der Antriebskette 23 eine Vielzahl von gleichmässig voneinander beabstandeten Mitnehmer 26 zum Mitnehmen von Förderwagen 10 in einem Mitnahmeabschnittes M2 der Mitnahme-Führungsschiene 2.1 angeordnet sind (siehe auch **Figur 3****).**

Anstelle einer Antriebskette 23 kann allerdings auch ein anderer Längskörper wie, ein Riemen oder Seil vorgesehen sein, an welchem die Mitnehmer 26 angeordnet sind.

Die Antriebseinrichtung 20 umfasst ferner einen einteiligen, plattenförmigen Grundkörper 21 aus Kunststoff, in welchem ein umlaufend geschlossener und einseitig offener Aufnahmekanal 22 ausgebildet bzw. ausgestaltet ist. Der Aufnahmekanal 22 liegt also als geschlossene Kanalschlaufe vor. Der Aufnahmekanal 22 enthält einen Kanalboden 40, zwei seitliche Kanalwände 41 und eine nach oben weisende Kanalöffnung.

Die in einer horizontalen ebene verlaufende Antriebskette 23 ist im Aufnahmekanal 22 geschlossen umlaufend angeordnet.

Der Aufnahmekanal 22 bildet einen bogenförmigen Mitnahmeabschnittes M1 aus, in welchem die Mitnehmer 26 der Antriebskette 23 die entlang des ebenfalls bogenförmigen Mitnahmeabschnittes M2 der Mitnahme-Führungsschiene 2.1 geführten Förderwagen 10 aktiv mitnehmen und einer Weiterförder-Führungsschiene 2.3 zufördern.

Der bogenförmige Mitnahmeabschnittes M2 der Mitnahme-Führungsschiene 2.1 verläuft entsprechend neben dem Mitnahmeabschnitts M1 des Aufnahmekanals 22 und parallel zu diesem.

Der Aufnahmekanal 22 bildet ferner einen Rückführabschnitt R aus, in welchem die Antriebskette 23 zurückgeführt wird. Hierzu wird die Antriebskette 23 am Ende des Mitnahmeabschnittes M1 über einen U-förmigen Umlenkabschnitt 22.1 des Aufnahmekanals 22 vom Mitnahmeabschnitt M1 in den Rückführabschnitt R umgelenkt. Am Ende des Rückführabschnitts R wird die Antriebskette 23 wiederum über einen U-förmigen Umlenkabschnitt 22.2 des Aufnahmekanals 22 vom Rückführabschnitt R wieder in den Mitnahmeabschnitt M1 umgelenkt.

Im Rückführabschnitt bildet der Aufnahmekanal 22 einen Funktionsbereich B aus, in welchem eine Kettenrad 24 zum Antreiben der Antriebskette 23 sowie das Kettenspannrad 45 einer Kettenspannvorrichtung 25 angeordnet ist. Im Funktionsbereich B weist der Aufnahmekanal 22 zur Aufnahme von Funktionselementen eine entsprechende Verbreitung auf.

Das Kettenrad 24 wird über einen Antriebsmotor, wie Elektromotor, angetrieben (nicht gezeigt). Der Antrieb des Kettenrades 24 bzw. des dazugehörigen Antriebmotors wird über die Steuerungseinrichtung 8 der Hängeförderanlage gesteuert.

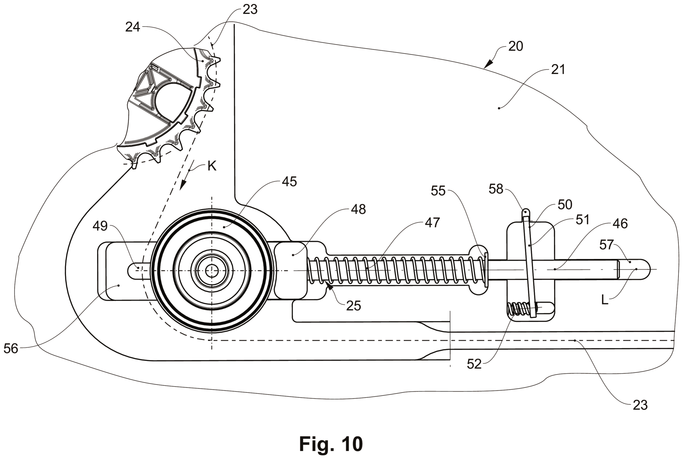

Die Kettenspannvorrichtung 25 ist in eine Vertiefung im Grundkörper 21 eingelassen bzw. eingelegt (siehe auch **Figur 10****),** welche ebenfalls Teil des Aufnahmekanals 22 ist. Die als Selbstspannvorrichtung ausgelegte Kettenspannvorrichtung 25 enthält ein Kettenspannrad 45, um welches die Antriebskette 23 teilumfänglich geführt ist. Die Kettenspannvorrichtung 25 wirkt zwecks Aufbau und Erhalt der Kettenspannung unter Ausübung einer Druckkraft auf die Antriebskette 23 ein und bildet mit dieser über das Kettenspannrad 45 einen entsprechenden Kontaktschluss aus. Im vorliegenden Ausführungsbeispiel bildet das Kettenspannrad 45 mit der Antriebskette 23 einen Reibschluss aus. Das Kettenspannrad 45 weist zur Erhöhung des Reibwiderstandes mindestens einen umlaufenden Kunststoffring, wie O-Ring, z. B. aus Gummi, auf. Das Kettenspannrad 45 kann aber auch als Zahnrad ausgebildet sein und über die Zahnung mit der Antriebskette 23 einen Formschluss ausbilden.

Das Kettenspannrad 45 ist mit einer Kettenspannachse 46 verbunden, welche in einem im Grundkörper 21 angeordneten Spannachskanal 57 geführt angeordnet ist. Eine als Schraubenfeder ausgebildete Druckfeder 47 umgibt die Kettenspannachse 46. Die Druckfeder 47 dient der Erzeugung einer Druckkraft auf die Antriebskette 23 über das Kettenspannrad 45.

Die Druckfeder 47 ist mit ihrem dem Kettenspannrad 45 entfernten Ende im Anschlag mit einem scheibenförmigen Anschlagelement 55, welches im Spannachskanal 57 angeordnet ist und quer zu diesem verläuft. Die Kettenspannachse 46 ist durch eine Öffnung im Anschlagelement 55 geführt.

Das Anschlagelement 55 steht mit randlichen Abschnitten seitlich vom Spannachskanal 57 an einer Wand des Grundkörpers 21 an und ist so gegen eine axiale Verschiebung in eine vom Kettenspannrad 45 entgegengesetzte, axiale Richtung gesichert. Das Anschlagelement 55 verhindert so eine axiale Verschiebung der Druckfeder 47 in eine vom Kettenspannrad 45 entgegengesetzte Richtung.

Die Druckfeder 47 ist ferner mit ihrem dem Kettenspannrad 45 zugewandten Ende im Anschlag mit einem Führungselement 48, welches Teil einer Halterung 56 ist, die mit dem Kettenspannrad 45 und der Kettenspannachse 46 verbunden ist. Das Kettenspannrand 45 ist zusammen mit der Kettenspannachse 46 und der besagten Halterung 56 entlang der Längsachse L der Kettenspannachse 46 relativ zum Grundkörper 21 verschiebbar gelagert.

Bei nachlassender Kettenspannung wird das Kettenspannrad 45 zusammen mit der Halterung 56 aufgrund der permanent auf das mit der Halterung 56 verbundenen Führungselement 48 einwirkende Druckkraft der Druckfeder 47 unter Wiederherstellung einer Soll-Kettenspannung selbsttätig in axialer Richtung zur Antriebskette 23 hin verschoben. Die Halterung 56 wird dabei über das Führungselement 48 in einem verbreiterten Abschnitt des Spannachskanals 57 geführt.

Die Halterung 56 weist ihrerseits einen in der Längsachse L der Kettenspannachse 46 ausgerichteten Führungsschlitz 49 auf, durch welchen ein Achsabschnitt des Kettenspannrades 45 geführt und auf der Gegenseite fixiert bzw. verschraubt ist. Das Kettenspannrad 45 lässt sich nun für die Grundeinstellung der Kettenspannung entlang des Führungsschlitzes 49 in Längsrichtung verschieben und nach erfolgter Einstellung über den Achsabschnitt am Führungsschlitz 49 der Halterung 56 unverschiebbar fixieren. Das Nachspannen der Antriebskette 23 bzw. die Aufrechterhaltung einer Soll-Kettenspannung erfolgt anschliessend ausschliesslich über die von der Druckfeder 47 indirekt auf das Kettenspannrad 45 ausgeübte Federkraft.

Da die Kettenspannung vergleichsweise gering ist, lässt sich die Kettenspannung mit vergleichsweise geringer Kraft aufrecht erhalten, was den Einsatz von Druckfedern erlaubt. Da überdiese der Verzug des Antriebskette 23 aufgrund der geringeren Kettenspannung klein bleibt, muss das Kettenspannrad 45 zwecks Aufrechterhaltung der Kettenspannung auch keinen allzu grossen Weg entlang der Längsachse L der Kettenspannachse 46 zurücklegen.

Die Kettenspannvorrichtung 25 enthält im Weiteren eine Rücklaufsperre 50 zur Verhinderung eines Zurückweichens des Spannrades 45 und dadurch einer unerwünschten Abnahme der Kettenspannung.

Die Rücklaufsperre 50 enthält ein plattenförmiges Sperrelement 51, welches senkrecht zur Kettenspannachse 46, d.h. quer durch den Spannachskanal 57 verläuft. Das Sperrelement 51 weist eine Durchgangsöffnung auf, durch welche die Kettenspannachse 46 geführt ist. Das Sperrelement 51 greift mit einem ersten, seitlichen Endabschnitt in eine seitliche Nut 58 in einer Kanalwand des Grundkörper 21 ein. Der erste, seitliche Endabschnitt des Sperrelement 51 ist dadurch gegen eine Verschiebung entlang der Längsachse L der Kettenspannachse 46 gesichert. Der gegenüberliegende, zweite seitliche Endabschnitt des Sperrelements 51 ist dahingegen im Wesentlichen parallel zur Längsachse L der Kettenspannachse 46 verschiebbar gelagert. Der zweite seitliche Endabschnitt wirkt mit einer Sperrfeder 52 zusammen, welche eine Druckkraft auf den zweiten Endabschnitt ausübt, die im Wesentlichen parallel zur Längsachse L der Kettenspannachse 46 und vom Kettenspannrad 45 weg gerichtet ist. Die Sperrfeder 52 ist hier als Schraubenfeder ausgebildet, deren Federachse im Wesentlichen parallel zur Längsachse L der Kettenspannachse 46 verläuft.

Durch die auf den zweiten Endabschnitt ausgeübte Druckkraft der Sperrfeder 51 verschiebt sich der zweite Endabschnitt des Sperrelementes 51 im Wesentlichen in Längsrichtung L der Kettenspannachse 46 vom Kettenspannrad 46 weg. Das Sperrelement 51 nimmt dadurch im Spannachskanal 57 eine gegenüber der Längsachse L der Kettenspannachse 46 geneigte Position ein, was zu einem Verkanten des durch die Durchgangsöffnung des Sperrelements 51 geführten Kettenspannachse 46 gegenüber dem Sperrelement 51 führt. Durch das Verkanten der Kettenspannachse 46 mit dem geneigten Sperrelement 51 ist die Kettenspannachse 46 und somit auch das Kettenspannrad 45 gegen ein Zurückweichen gesichert.

Zur Lösung der Sperrung wird auf den zweiten, seitlichen Endabschnitt des Sperrelement 51 ein der Federkraft der Sperrfeder 52 entgegenwirkende Gegenkraft ausgeübt, welche das Sperrelement 51 gegenüber der Kettenspannachse 46 wieder in eine senkrechte Lage zurückführt, wodurch die Verkantung aufgehoben wird.

Ein solche Gegenkraft kann manuell ausgeübt werden, in dem auf den zweiten Endabschnitt des Sperrelements 51 von der Gegenseite ein der Federkraft der Sperrfeder 52 entgegenwirkende Druckkraft ausgeübt wird.

Die besagte Gegenkraft kann auch durch die Druckfeder 47 selbst erzeugt werden. So wird die Kettenspannachse 46 bei einem Nachspannen der Antriebskette 23 aufgrund der Federkraft der Druckfeder 47 zur Antriebskette 23 hin bewegt. Bei dieser axialen Verschiebung der Kettenspannachse 46 wird das verkantete Sperrelement 51 im Bereich des zweiten, seitlichen Endabschnittes mitgezogen bis das Sperrelement 51 aus der geneigten Sperrstellung in eine gegenüber der Kettenspannachse 46 senkrechte Lage oder annähernd senkrechte Lage zurückgeführt und die Verkantung gelöst wird. Die der Druckkraft der Sperrfeder 52 entgegenwirkende Gegenkraft ist hier eine auf das Sperrelement 51 mittig angreifende Zugkraft. Beim Lösen der Verkantung springt das Sperrelement 51 aufgrund der Federkraft der Sperrfeder 52 wieder zurück in eine geneigte Lage, wodurch die Verkantung und dadurch die Sperrwirkung wieder hergestellt wird.

Da sich also die Verkantung bei einer Bewegung der Kettenspannachse 46 zur Antriebskette 23 hin lösen kann, wirkt die Rücklaufsperre 50 nur gegen ein Zurückweichen der Kettenspannachse 46 nicht jedoch gegen eine Bewegung der Kettenspannachse 46 zur Antriebskette 23 hin zwecks Nachspannen der Antriebskette 23.

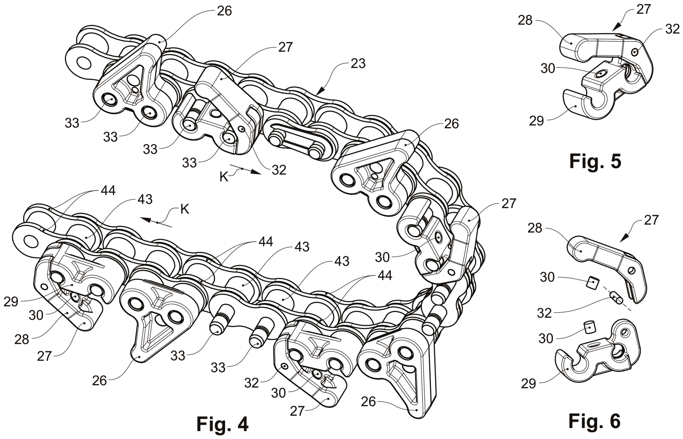

Die Antriebskette 23 ist als Rollenkette ausgeführt und enthält über seitliche Verbindungslaschen 44 miteinander verbundene Rollen 43 (siehe **Figur 4**). Die Rollen 43 sind drehbar gelagert, so dass diese reibungsarm entlang von Kanalwänden des Aufnahmekanals 22 im Grundkörpers 21 abrollen können. Zu einer Mitnahmeseite hin enthält die Antriebskette 23 Befestigungsbolzen 33, welche in der Verlängerung der Rollenachsen angeordnet sind. Entsprechend ist jeder Rolle 43 jeweils ein Befestigungsbolzen 33 zugeordnet.

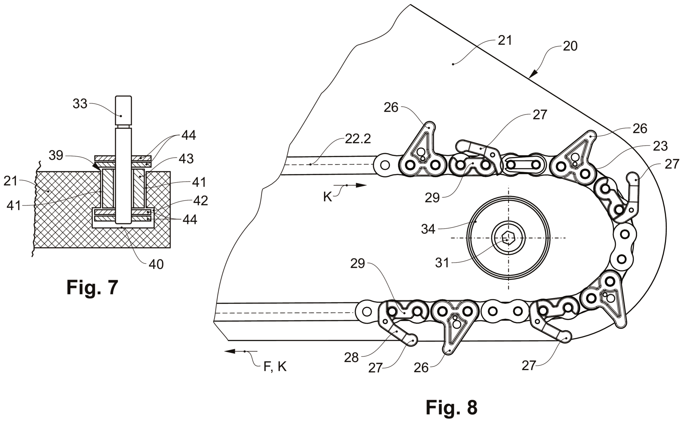

Der Aufnahmekanal 22 ist im Mitnahmeabschnitt M1, im Umlenkabschnitt 22.1 vom Mitnahmeabschnitt M1 in den Rückführabschnitt R sowie im Umlenkabschnitt 22.2 vom Rückführabschnitt R in den Mitnahmeabschnitt M1 als nutförmiger Führungskanal ausgebildet. Der nutförmige Führungskanal 22 enthält einen Nutboden 40 und zwei seitlich voneinander beabstandete Nutwände 41. Die Antriebskette 23 wird durch die Nutwände 41 seitlich gestützt. Die Antriebskette 23 rollt über ihre Rollen 43 entlang der Nutwände 41 ab, was die Reibung zwischen Kettenführung und Antriebskette 23 erheblich reduziert (siehe **Figur 7**).

Des Weiteren weisen beide Nutwände 41 des nutförmigen Kanalabschnittes eine längslaufende, seitliche Hinterschneidung 42 auf. Die Rollenkette 23 und die seitlichen Hinterschneidungen 42 sind so ausgebildet und aufeinander abgestimmt, dass die zum Nutboden 40 hin angeordneten Verbindungslaschen 44 der Rollenkette 23 in die seitliche Hinterschneidung 42 eingreifen und die Rollenkette 23 so gegen eine in Richtung Nutöffnung 39 wirkende Zugkraft sichern. Die öffnungsseitigen Verbindungslaschen 44 der Rollenkette 23 übergreifen die Nutöffnung 39 seitlich.

Der nutförmige Kanalabschnitt gewährleistet eine spurgetreue Führung der Antriebskette 23, ohne dass hierzu Führungselemente wie Führungsräder notwendig werden. Hierzu ist die Breite der Nut derart gewählt, dass die Antriebskette 23 seitlich nicht ausweichen kann und der durch den nutförmigen Führungskanalabschnitt vorgegebenen Führungsspur bzw. -bahn des Aufnahmekanals 22 folgt.

Die Antriebseinrichtung 20 ist an einer unterhalb der Antriebseinrichtung 20 angeordneten Tragstruktur 6 befestigt. In **Figur 3** ist die Antriebseinrichtung 20 als Moduleinheit dargestellt. Die Antriebseinrichtung 20 enthält mehrere Befestigungsschnittstellen 31, über welche diese bzw. die Moduleinheit an eine Tragstruktur 6 befestigbar ist. Die Tragstruktur 6 ist in Figur 1 und 2 als Montageblech dargestellt. Um Schwingungen, welche vom Antrieb und der Bewegung der Antriebskette 23 ausgehen, zu dämpfen, ist die Antriebseinrichtung 20 an den Befestigungsschnittstellen 31 über Elastomer-Dämpfungselemente mit der Tragstruktur 6 verbunden.

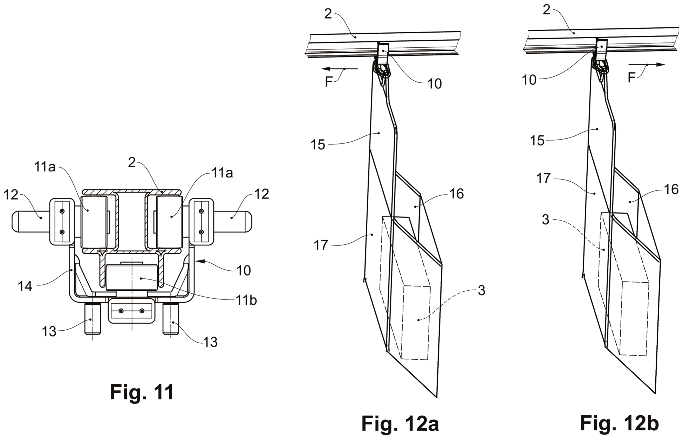

Die als Aussenläufer ausgebildeten Förderwagen 10 weisen jeweils einen U-förmigen Wagenkörper 14 auf, an welchem Laufrollen 11a befestigt sind, über welche die Förderwagen 10 entlang von Laufflächen der Führungsschiene 2 abrollen (siehe **Figur 11**).

Ferner umfassen die Förderwagen 10 jeweils auch eine Führungsrolle 11b zur Stabilisierung der Förderwagens 10 an der Führungsschiene 2. Die Förderwagen 10 enthalten überdies jeweils eine Verbindungsschnittstelle 13 in Form einer Halterung zum Anbringen eines Fördermittels, wie einer Fördertasche 15. Des Weiteren enthalten die Förderwagen 10 jeweils seitlich abstehende Kontaktzapfen 12, auch Mitnahmestifte genannt, an welchen die Mitnehmer 26 der Antriebskette 23 zum Mitnehmen der Förderwagen 10 in Förderrichtung F angreifen und einen Mitnahmekontakt ausbilden.

Die Fördertasche 15 ist über einen Bügel an der Verbindungsschnittstelle 13 des Förderwagens 10 angehängt und bildet ein Aufnahmeabteil 16 zur Aufnahme von Stückgütern 3, wie Pakete oder Beutelware aus. In **Figur 12a** ist eine Fördertasche 15 mit gegenüber der Rückwand 17 nachlaufendem Aufnahmeabteil 16 dargestellt. In **Figur 12b** ist eine Fördertasche 15 mit gegenüber der Rückwand 17 vorlaufendem Aufnahmeabteil 16 dargestellt.

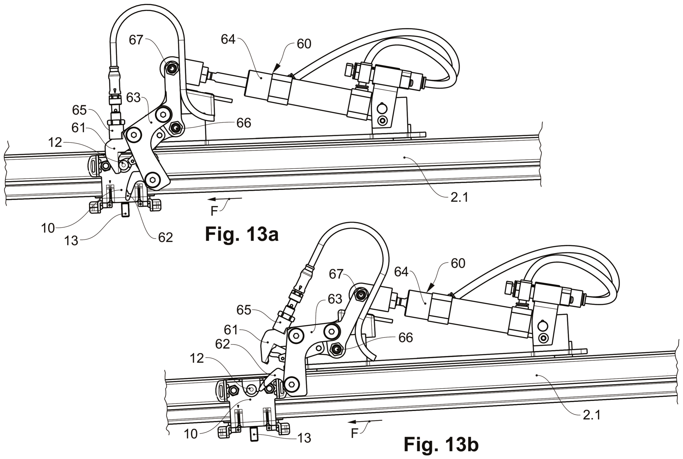

Die Hängeförderanlage gemäss Figur 2 enthält im Weiteren auch eine Vereinzelungsvorrichtung 60 zum einzelnen Entlassen bzw. Freigeben von Förderwagen 10 in den Mitnahmeabschnitt M2 der Mitnahme-Führungsschiene 2.1 (siehe auch **Figuren 13a und 13b****).**

Die Vereinzelungsvorrichtung 60 enthält ein Rückhalteorgan 61 zum Zurückhalten eines Förderwagens 10. Das Rückhalteorgan 61 bildet in einer Rückhalteposition mit dem seitlich abstehenden Kontaktzapfen 12 des Förderwagens 10 einen Rückhaltekontakt aus (siehe Figur 13a). So weist das Rückhalteorgan 61 einen in die Bewegungsbahn des Kontaktzapfen 12 eingreifenden Rückhaltefinger aus. Der sich in Förderrichtung F bewegende Förderwagen 10 läuft mit seinem Kontaktzapfen 12 auf den in die Bewegungsbahn des Kontaktzapfens 12 ragenden Rückhaltefinger auf und wird an einer weiteren Bewegung in Förderrichtung F gehindert.

Das Rückhalteorgan 61 ist über ein Kraftübertragungsorgan 63 mit einem Aktuator 64 in Ausführung eines Pneumatikzylinders verbunden. Durch Betätigen des Pneumatikzylinders 64 wird das Rückhalteorgan 61 bzw. dessen Rückhaltefinger aus seiner Rückhalteposition (siehe Figur 13a) in eine Freigabeposition (siehe Figur 13b) angehoben. In der Freigabeposition befindet sich der Rückhaltefinger ausserhalb der Bewegungsbahn des Kontaktzapfens 12, so dass der Förderwagen 10 ungehindert in den Mitnahmeabschnitt M2 der Mitnahme-Führungsschiene 2.1 rollen kann (Figur 13b).

Im vorliegenden Ausführungsbeispiel befindet sich das Rückhalteorgan 61 bei ausgefahrenem Pneumatikzylinder 64 in der Rückhalteposition, während sich das Rückhalteorgan 61 bei zurückgezogenem Pneumatikzylinder 64 in einer hochgezogenen Freigabeposition befindet. Der Pneumatikzylinder 64 ist mittels Gelenkverbindungen 66, 67 über das Kraftübertragungsorgan 63 mit dem Rückhalteorgan 61 verbunden.

Die Vereinzelungsvorrichtung 60 enthält ferner auch ein Anschuborgan 62, welches bei der Freigabe eines Förderwagens 10 durch das Rückhalteorgan 61 und der Entlassung des Förderwagens 10 in den Mitnahmeabschnitt M2 der Mitnahme-Führungsschiene 2.1 auf den Förderwagen 10 eine Beschleunigungskraft in Förderrichtung F ausübt. Dies geschieht durch Ausbildung eines Anschubkontaktes zwischen dem Anschuborgan 62 und dem Kontaktzapfen 12 des Förderwagens 10.

Der Förderwagen 10 rollt dankt der über das Anschuborgan 62 erhaltenen Beschleunigung mit Schwung in den Mitnahmeabschnitt M2.

Das Anschuborgan 62 weist einen Anschubfinger auf, welcher in die Bewegungsbahn des Kontaktzapfens 12 eingreift und von hinten auf den Kontaktzapfen 12 einwirkt. Hierzu wird das Anschuborgan 62 bzw. dessen Anschubfinger durch den Aktuator 64 von unten angehoben und in die Bewegungsbahn des Kontaktzapfens 12 hochgeschwenkt.

Das Anschuborgan 62 ist ebenfalls mit dem Kraftübertragungsorgan 63 verbunden. Das Rückhalteorgan 61 und das Anschuborgan 62 werden also über das gemeinsame Kraftübertragungsorgan 63 vom gleichen Aktuator 64 betätigt. Die Betätigung des Aktuators 64 löst also sowohl die Freigabe-Bewegung des Rückhalteorgans 61 als auch und die Anschub-Bewegung des Anschuborgans 62 aus. Das Rückhalteorgan 61 und das Anschuborgan 62 werden also gemeinsam betätigt. Die Betätigung der Vereinzelungsvorrichtung 50, d.h. des Rückhalteorgans 61 und des Anschuborgans 62 erfolgt über die Steuerungseinrichtung 8 der Förderanlage 1. Das heisst, der Aktuator 64 wird durch die Steuerungseinrichtung 8 gesteuert. Das Rückhalteorgan 61 und das Anschuborgan 62 können entsprechend über ein gemeinsames Steuersignal betätigt werden. Eine separate Ansteuerung von Rückhalteorgan 61 Anschuborgan 62 ist nicht erforderlich.

Die Vereinzelungsvorrichtung 60 enthält ferner einen Sensor 65 zum Detektieren der Präsenz eines vom Rückhalteorgan 61 zurückgehaltenen Förderwagens 10. Der Sensor 65 kann ein Berührungssensor sein, welcher einen Kontakt zum Förderwagen 10 in der Rückhalteposition ausübt. So kann der Sensor 65 eine Kontaktzunge aufweisen, welche durch einen Förderwagen 10 in der Rückhalteposition aus einer Ausgangsstellung nach oben gedrückt wird und so die Präsenz des Förderwagens 10 anzeigt. Befindet sich kein Förderwagen 10 in Rückhalteposition, so befindet sich die Kontaktzunge in der Ausgangsstellung. Der Sensor 65 kann aber auch ein berührungsloser Sensor, wie z. B. ein optischer Sensor oder Magnetsensor sein.

Die Förderwagen 10 werden einzeln in den Mitnahmeabschnitt M2 entlassen. Ein von der Vereinzelungsvorrichtung 50 in den Mitnahmeabschnitt M2 entlassene und beschleunigte Förderwagen 10 wird durch einen aus dem Rückführabschnitt R in den Mitnahmeabschnitt M1 der Antriebskette einschwenkenden Mitnehmer 26 entlang der Mitnahme-Führungsschiene 2.1 mitgenommen. Der Mitnehmer 26 bewegt sich dabei in Förderrichtung F betrachtet von hinten an den Kontaktzapfen 12 des Förderwagens 10 und bildet mit diesem einen Mitnahmekontakt aus.

Durch die Ausbildung von Paarungen von Förderwagen 10 und Mitnehmbern 26 findet ein Eintakten der Förderwagen 10 statt. Die Förderwagen werden fortan im Fördertakt der Mitnehmer 26 bewegt. Die Mitnehmer 26, welche jeweils einen Mitnehmerfinger bzw. -nase ausbilden, sind an Befestigungsbolzen 33 der Antriebskette 23 angebracht.

Die an den Förderwagen 10 hängend angebrachten Fördertaschen 15 geraten durch die Beschleunigung der der aus Vereinzelungsvorrichtung 60 entlassenen Förderwagen 10 oftmals in Schwingung. Diese Schwingung überträgt sich auch auf die Förderwagen 10, was zu einem unruhigen bzw. ungleichmässigen Laufverhalten der Förderwagen 10 beim Eintritt in den Mitnahmeabschnitt M2 führt. Dies erschwert die Ausbildung von Paarungen aus Förderwagen 10 und Mitnehmern 26 und folglich das präzise Eintakten der Förderwagen 10.

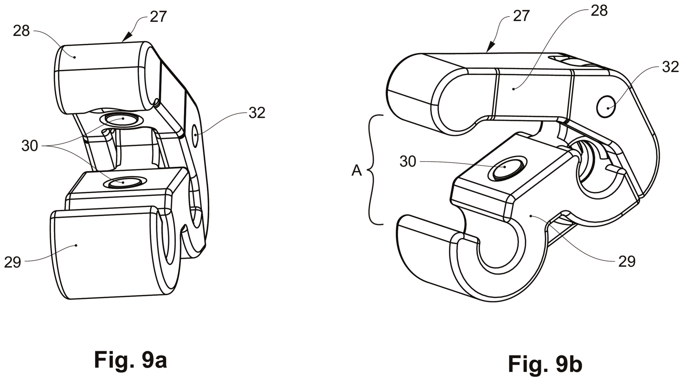

Aus diesem Grund ist in Bewegungsrichtung K der Antriebskette 23 betrachtet an der Antriebskette 23 jeweils vor dem Mitnehmer 26 eine Sperrklinke 27 mit einem entgegen der Bewegungsrichtung K der Antriebskette 23 schwenkbaren Klinkenfinger 28 angeordnet (siehe **Figuren 4-6** und **8-9**).

Der Klinkenfinger 28 weist eine entgegen der Förder- bzw. Mitnahmerichtung gerichtete Krümmung auf und ist über eine Gelenkverbindung schwenkbar an einem Gegenelement 29 der Sperrklinke 27 angebracht. Die Gelenkverbindung wird über eine zur Antriebskette 23 hin sowohl durch das Gegenelement 29 als auch durch den Klinkenfinger 28 geführten Gelenkachse 32 ausgebildet.

Die Sperrklinke 27 ist über das Gegenelement 29 an der Antriebskette 23 befestigt. Das Gegenelement 29 weist hierzu Klammern bzw. Clips in Form von offenen Ringen auf, welche über die Befestigungsbolzen 33 der Antriebskette 23 geschoben sind und mit diesen eine Schnappverbindung eingehen. Eine andere Befestigungsart ist ebenfalls möglich.

Die Befestigungsbolzen 33 weisen jeweils eine umlaufende Nut auf, über welche die an den Befestigungsbolzen 33 angebrachten Mitnehmer 26 und Sperrklinken 27 gegen eine axiale Abzugskraft gesichert werden können.

Sowohl am Klinkenfinger 28 als auch am Gegenelement 29 ist jeweils ein Magnet 30 von gleicher Polung derart angeordnet, dass diese eine Rückstellkraft auf den Klinkenfinger 28 ausüben, mittels welcher der Klinkenfinger 28 in eine Spreizstellung A bewegt und in dieser gehalten wird. In dieser Spreizstellung steht der Klinkenfinger 28 vom Antriebsorgan 23 nach aussen ab und bildet eine Vorlaufsperre für einen Förderwagen 10 aus. Es können auch andere Rückstellmittel, wie Druckfeder, vorgesehen sein. Rückstellmittel in Form von gleichgepolten Magneten 30 haben allerdings den Vorteil, dass diese konstruktiv einfach, robust, langlebig und nicht störungsanfällig sind.

Wird nun ein Förderwagen 10 durch die Vereinzelungsvorrichtung 60 mit Schwung in den Mitnahmeabschnitt M2 entlassen, so wird dieser durch die Sperrklinke 27 aufgefangen und vom sich von hinten annähernden, nachlaufenden Mitnehmer 26 mitgenommen. Der Bewegungsraum des Förderwagens 10 beschränkt sich dabei auf einen durch die Sperrklinke 27 und den nachlaufenden Mitnehmer 26 aufgespannten Streckenabschnitt entlang der Antriebskette 23. Dies erlaubt eine taktgenaue Bewegung der Förderwagen 10 durch den Mitnahmeabschnitt M2, auch wenn die Förderwagen 10 ein durch das Eintakten verursachtes, unruhiges bzw. ungleichmässiges Laufverhalten aufweisen.

Wird ein Förderwagen 10 wegen seines unruhigen bzw. ungleichmässigen Laufverhaltens beim Eintritt in den Mitnahmeabschnitt M2 von der Sperrklinke 27 nicht zurückgehalten, so wird der Förderwagen 10 spätestens durch den vorlaufenden Mitnehmer 26 aufgehalten und abgebremst. Je nach Schwingungszustand des Förderwagens 10 wird dieser in die Gegenrichtung zurückgeworfen. Der sich nun in Förderrichtung F von hinten an den Kontaktzapfen 12 des Förderwagens 10 annähernde Klinkenfinger 28 der Sperrklinke 27 bewegt sich unter dem Kontaktzapfen 12 hindurch, wobei der Klinkenfinger 28 durch den Kontaktzapfen 12 in einer Schwenkbewegung um die Gelenkachse 32 zum Gegenelement 29 hin gedrückt wird. Sobald der Klinkenfinger 28 den Kontaktzapfen 12 unterquert hat, springt dieser durch die Rückstellkraft der sich gegenseitig abstossenden Magnete 30 wieder zurück in seine Spreizstellung. Der Förderwagen 10 ist nun in einer taktgenauen Position zwischen der Sperrklinke 27 und dem nachlaufenden Mitnehmer 26 gefangen.

Die Antriebskette 23 mit den oben beschriebenen Mitnehmern 26 und Sperrklinken 27 garantiert deshalb auch bei nicht präziser Entlassung der Förderwagen 10 aus der Vereinzelungsvorrichtung 60 sowie bei einem unruhigen bzw. ungleichmässigen Laufverhalten des Förderwagens 10 eine taktgenaue Übergabe an die Mitnehmer 26 im Mitnahmebereich M1, M2.

Die Förderweiche 5 gemäss Figur 2 dient z. B. dazu, Förderwagen 10 mit leeren Fördertaschen 15 aus einem Leertaschenspeicher (nicht gezeigt) in eine Förderstrecke, z. B. Beschickungsstrecke, einzuschleusen zum Beladen der Fördertaschen 15 mit Stückgütern 6 an einer Beschickungseinrichtung.

## Patentansprüche

1. **Antriebseinrichtung** (20) für eine Hängeförderanlage (1) zum Antreiben von entlang einer Mitnahme-Führungsschiene (2.1) bewegbaren Förderwagen (10) zur hängenden Förderung von Fördergütern (3), wobei die Antriebseinrichtung (20) ein endlos umlaufendes, flexibles Antriebsorgan (23) mit einer Mehrzahl von am Antriebsorgan (21) angeordneten und voneinander beabstandeten Mitnehmern (26) zum Mitnehmen von entlang der Mitnahme-Führungsschiene (2.1) angeordneten Förderwagen (10) sowie ein Antriebselement (24) zum Antreiben des Antriebsorgans (21) enthält,
**dadurch gekennzeichnet, dass**
die Antriebseinrichtung (20) einen Grundkörper (21) umfasst, welcher einen Aufnahmekanal (22) aufweist, in welchem das endlos umlaufende, flexible Antriebsorgan (23) angeordnet und geführt ist.

2. Antriebseinrichtung nach Anspruch 1, **dadurch gekennzeichnet, dass** der Aufnahmekanal (22) einen Mitnahmeabschnitt (M1), entlang welchem Förderwagen (10) von Mitnehmern (26) mitgenommen werden, und einen Rückführabschnitt (R), in welchem das Antriebsorgan (23) mit den Mitnehmern (26) zurückgeführt wird, aufweist.

3. Antriebseinrichtung nach einem der Ansprüche 1 bis 2, **dadurch gekennzeichnet, dass** der Aufnahmekanal (22) eine geschlossene Kanalschlaufe ausbildet, und das Antriebsorgan (23) ausschliesslich im Aufnahmekanal (22) verläuft.

4. Antriebseinrichtung nach einem der Ansprüche 2 bis 3, **dadurch gekennzeichnet, dass** der Aufnahmekanal (22) im Mitnahmeabschnitt (M1) mindestens über eine Teilstrecke, insbesondere über den gesamten Mitnahmeabschnitt (M1) bogenförmig ausgestaltet ist.

5. Antriebseinrichtung nach einem der Ansprüche 1 bis 4, **dadurch gekennzeichnet, dass** der Aufnahmekanal (22) wenigstens abschnittsweise als Führungskanal mit einem Kanalboden (40) und zwei seitlichen, voneinander beabstandeten Kanalwänden (41) ausgestaltet ist, wobei das Antriebsorgan (23) durch die Kanalwände (41) seitlich gestützt ist.

6. Antriebseinrichtung nach einem der Ansprüche 1 bis 5, **dadurch gekennzeichnet, dass** das Antriebsorgan (23) eine Antriebskette, insbesondere eine Rollenkette mit einer Mehrzahl von über Verbindungslaschen (44) miteinander verbundenen Rollen (43) ist, wobei die Rollenkette (23) und der Führungskanal (22) so ausgestaltet sind, dass die Rollen (43) entlang der Kanalwände (41) des Führungskanals (22) abrollen können.

7. Antriebseinrichtung nach Anspruch 6, **dadurch gekennzeichnet, dass** beide Kanalwände (41) des Führungskanal eine längslaufende, seitliche Hinterschneidung (42) aufweisen, und die Rollenkette (23) und die seitliche Hinterschneidung (42) so ausgebildet sind, dass die Verbindungslaschen (44) der Rollenkette (23) in die seitliche Hinterschneidung (42) eingreifen und die Rollenkette (23) gegen eine in Richtung Kanalöffnung (39) wirkende Zugkraft sichern.

8. Antriebseinrichtung nach einem der Ansprüche 1 bis 7, **dadurch gekennzeichnet, dass** der Grundkörper (21) aus einem Kunststoff, insbesondere aus einem PE-UHMW (Ultra-High-Molecular-Weight Polyethylene) besteht oder diesen enthält.

9. Antriebseinrichtung nach einem der Ansprüche 1 bis 8, **dadurch gekennzeichnet, dass** der Grundkörper (21) ein Flächenelement, wie Platte, ist.

10. Antriebseinrichtung nach einem der Ansprüche 1 bis 9, **gekennzeichnet durch** eine Spannvorrichtung (24), welche in eine Ausnehmung im Grundkörper (21) eingelassen ist.

11. Antriebseinrichtung nach einem der Ansprüche 1 bis 10, **dadurch gekennzeichnet, dass** der Aufnahmekanal (22) in einer im Wesentlichen horizontalen Ebene verläuft.

12. **Förderweiche** (5) für eine Hängeförderanlage (1) zum hängenden Fördern von Fördergütern (3) mit einer Mitnahme-Führungsschiene (2.1) und einer Antriebseinrichtung (20) gemäss einem der Ansprüche 1 bis 11.

13. Förderweiche nach Anspruch 12, **dadurch gekennzeichnet, dass** die Mitnahme-Führungsschiene (2.1) in einem Mitnahmeabschnitt (M2) einen bogenförmigen Verlauf aufweist, und der Mitnahmeabschnitt (M1) des Aufnahmekanals (22) neben dem Mitnahmeabschnitts (M2) der Mitnahme-Führungsschiene (2.1) und insbesondere parallel zum Mitnahmeabschnitts (M2) der Mitnahme-Führungsschiene (2.1) verläuft.

14. Förderweiche nach einem der Ansprüche 12 bis 13, **gekennzeichnet durch** eine Zuförder-Führungsschiene (2.2), eine Weiterförder-Führungsschiene (2.3) und eine mit der Weiterförder-Führungsschiene (2.3) verbundene, bewegbare Leitschiene (2.4), welche mit einem freien Ende zwischen der Zuförder-Führungsschiene (2.2) und der Mitnahme-Führungsschiene (2.1) bewegbar ist.

15. **Hängeförderanlage** (1) zum hängenden Fördern von Fördergütern (3) mit einer Mitnahme-Führungsschiene (2.1) und einer Mehrzahl von entlang der mindestens einen Mitnahme-Führungsschiene (2.1) bewegbaren Förderwagen (10) zum Fördern von Fördergütern (3) sowie mit einer Antriebseinrichtung (20) gemäss einem der Ansprüche 1 bis 11.

16. Hängeförderanlage nach Anspruch 15, **gekennzeichnet durch** eine Förderweiche (5) nach einem der Ansprüche 12 bis 14, wobei die Antriebseinrichtung (20) und die Mitnahme-Führungsschiene (2.1) Teil der Förderweiche (5) ist.
